# EUROPEAN PATENT SPECIFICATION

(11) **EP 3 097 433 B1**
(45) Date of publication and mention of the grant of the patent: **30.12.2020**
(21) Application number: 15701142.0
(22) Date of filing: 16.01.2015
(51) Int. Cl.: G01S 13/86, G01S 13/08, G01S 13/58, G03B 13/36

(54) **CAMERA WITH RADAR-BASED AUTOFOCUS**
KAMERA MIT RADARBASIERTEM AUTOFOKUS
APPAREIL-PHOTO À MISE AU POINT AUTOMATIQUE À BASE DE RADAR

(30) Priority: 24.01.2014 EP 14152455
(43) Date of publication of application: 30.11.2016
(73) Proprietor: Sony Corporation, Tokyo 108-0075 (JP)
(72) Inventor: SCHWAGER, Andreas, 71336 Waiblingen (DE); REBERT, Martin, 68000 Colmar (FR); SCHILL, Dietmar, 71640 Ludwigsburg (DE)
(74) Representative: Witte, Weller & Partner Patentanwälte mbB
(86) International application number: PCT/EP2015/050802
(87) International publication number: WO 2015/110363

(56) References cited:
- EP-A2- 2 660 643
- WO-A1-2008/058770
- WO-A1-2008/117141
- WO-A1-2012/089206
- DE-A1- 19 749 167
- DE-U1-202012 103 986
- US-A- 4 534 629
- US-A1- 2012 330 528

## Description

### Field of the disclosure

The present disclosure relates to an autofocus system and an autofocus control method for a camera and to a computer program for implementing the method.

### DESCRIPTION OF RELATED ART

Today's autofocus systems rely on infrared (IR) illuminations and today's autofocus sensors cannot measure the speed of objects. These autofocus systems use an assist lamp usually interfering people's mood before a snapshot. Radar based focus systems do not need an assist lamb. Simple or conventional ultrasonic signals are also used to measure the distance to the object.

Known Single Input - Single Output (SISO) FMCW (frequency modulated continuous wave) radars are able to measure the speed (Doppler) of the reflected signals, but also cannot isolate the object with the fastest movement in case of multiple objects.

Further, there are AI (artificial intelligence) servo focus systems on the market, e.g. used in the Sony α99 camera. Such AI servo focus systems generally use algorithms that constantly predict where a subject is about to be based on its speed and acceleration data from the autofocus sensor. AI servo is known also as "continuous focus" (AF-C). In focus tracking, it is used to track a subject as it moves around the frame, or towards and away from the camera. When in use, the lens will constantly maintain its focus on the subject, for which purpose it is commonly used for sports and action photography. The AI servo approach is a higher layer calculation of the speed and movements measurements. The artificial intelligence algorithms require lots of processing power raising the price and battery consumption of the camera system. Additionally this processing causes delay when recording a snapshot. Furthermore such processing has to be aware of the history of the scene to follow and predict the movement of the object. Sudden snapshots focusing to the objects with highest velocity are impossible.

Other focusing systems do not measure the distance to the object. They rely on sharpening the edges or optimizing the contrast in the picture content. The user touches the location on the screen that he likes to sharpen. The lens wobbles its dynamic range where an algorithm monitors at which lens position the sharpest image is achieved. Finally this lens position is selected. This method is time consuming and too slow for sports photographing, e.g. for focusing on a tennis racket when hitting the ball.

The "background" description provided herein is for the purpose of generally presenting the context of the disclosure. Work of the presently named inventor(s), to the extent it is described in this background section, as well as aspects of the description which may not otherwise qualify as prior art at the time of filing, are neither expressly or impliedly admitted as prior art against the present disclosure.

WO 2008/117141 A1 discloses a device that may establish a distance of a device from a reference object. The device may also determine a difference or change in the distance, obtain a zoom value based on the difference or change, and zoom in or out on a view based on the zoom value.

WO 2008/058770 A1 discloses a mobile electronic device equipped with a radar. EP 2 660 643 A2 discloses a head mountable display system. US 2012/0330528 A1 discloses a driver assistance system using radar and video.

DE 197 49 167 A1 discloses a movie camera with an objective to adjust the zoom and focus based on a distance measurement, e.g., by a radar. Said prior art document focusses on recording subjects, e.g., for movie recordings or sport recordings, where reflectors and/or transmitters are attached to a predetermined subject. The transmitted or reflected light of the predetermined subject is used for adjusting the focus on the predetermined subject. US 4 534 629 A discloses a focusing system for a variable focus lens of a motion picture camera, which also bases on focusing on recording subjects, where transmitters or reflectors are attached to a predetermined target/subject.

DE 20 2012 103986 U1 discloses a system for video fixation and measurement of speed and coordination of vehicles. WO 2012/089206 discloses a method for creating an image document by identifying a vehicle measured by a radar device.

### SUMMARY

It is an object to provide a camera as well as to an autofocus system and an autofocus control method for a camera that enable a focusing on fast objects within a scene. It is a further object to provide a computer program and a non-transitory computer-readable recording medium.

According to aspects of the present disclosure there are provided a camera, and autofocus system and an autofocus control method as defined in the independent claims.

According to still further aspects a computer program is provided comprising program means for causing a computer to carry out the steps of the method disclosed herein, when said computer program is carried out on a computer.

Preferred embodiments are defined in the dependent claims. It shall be understood that the disclosed autofocus system and autofocus control method and the disclosed computer program have similar and/or identical preferred embodiments as the claimed camera and as defined in the dependent claims.

One of the aspects of the disclosure is to use a radar system for focusing the camera optics. In particular, distance and speed information of targets (also called objects) within a radar field of view is obtained by the radar system. This distance and speed information is then used for focusing the camera's optical system on a target based on a selected distance and/or a selected speed for instance on the fastest target.

For instance, in an embodiment an OFDM radar is used in a still picture or movie camera, which is able to focus the lenses on the target in the scene having the highest velocity. Frequently, in sports photographs the target with highest velocity is the most interesting one and desired to be in the focus. Utilizing an OFDM radar signal a Doppler-Range matrix can be calculated. Such a matrix enables to identify which target or object has the highest speed, e.g. in direction to the radar. Thereafter, its distance to the radar is determined from the Doppler-Range matrix, which distance is then used to focus the objective/lens onto said distance and, thus, onto the fastest target at said distance. By use of the OFDM radar the speed and distance information is available after calculating a two-dimensional Fourier transformation on the radar sensor data.

The proposed camera and method are able to provide and use additional information that is not available in known cameras or systems. Desired or new applications can thus be implemented in a rather inexpensive and comfortable manner enabling the realization of a consumer friendly and consumer affordable camera.

Today's high end still picture cameras still have a moving mirror implemented to mirror the IR light to the IR sensor before the picture is captured. Using a radar based autofocus, as proposed according to the present disclosure, the moving mirror is no more needed.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Fig. 1: shows a schematic diagram of the general layout of a camera according to the present disclosure,
- Fig. 2: shows a photograph of a scene and a corresponding Doppler-Range matrix,
- Fig. 3: shows of a schematic diagram a first embodiment of a camera according to the present disclosure,
- Fig. 4: shows a schematic diagram of a second embodiment of a camera according to the present disclosure, and
- Fig. 5: shows a graphic illustration of an example of a Doppler-Range matrix.

### DETAILED DESCRIPTION OF THE EMBODIMENTS

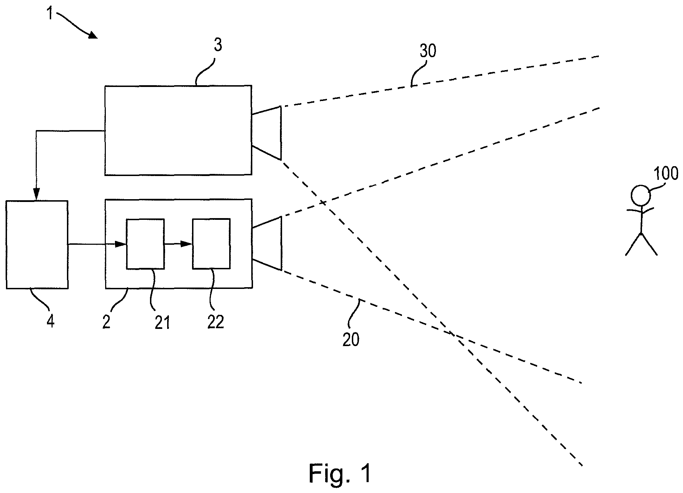

Referring now to the drawings, wherein like reference numerals designate identical or corresponding parts throughout the several views, Fig. 1 shows a schematic diagram of the general layout of a camera 1 according to the present disclosure, which may be a still picture camera or a video camera. The camera 1 generally comprises an optical system 2 that records images based on light entering the optical system 2 from an optical field of view 20. The optical system 2 particularly comprises a focusing unit 21 that is configured to focus said optical system 2, in particular camera optics 22, such as a lens, lens arrangement and/or objective, on a target 100 in the optical field of view 20. Further, a radar system 3 is provided that obtains distance and speed information of targets within a radar field of view 30 that is overlapping with said optical field of view 20 of the optical system. Said distance and speed information indicates the distance and speed of targets with respect to the camera 1. Finally, a control unit 4 is provided that controls the focusing unit 21 to focus said optical system 2 on a target based on a selected distance and/or a selected speed.

Preferably, the radar field of view 30 substantially overlaps, coincides or is even larger than the optical field of view 20, i.e. completely covers the optical field of view 20. The radar field of view 30 may be static, while the optical field of view may generally be variable in case of using zoom optics. Hence, the size and orientation of the radar field of view 30 may be adapted to correspond to the size and orientation of the maximally possible optical field of view 20, or the size and orientation of the radar field of view 30 may be made adaptive so that it can "follow" the size and orientation of the optical field of view.

It shall be noted that the control unit 4 may also be part of the optical system 2 and/or the radar system 3. Further, the focusing unit 21 and the control unit 4 can together be considered as an autofocus system, which may be arranged within or without the optical system and which may be available as a separate unit, implemented in hard- and/or software, and provided originally in the camera or as additional add-on unit for later improvement of the camera.

Usually, in sports photographing the scene or the target providing fastest velocity is the most interesting one. Due to the high motion it is difficult for the photographer to focus on the fastest target. Frequently, at sports photographing multiple targets in individual distances are visible. Known autofocus systems, however, often focus on another target. For instance, in soccer the photographer is located behind the goal. Goal net, goal post, goalkeeper and fullback players are located in the foreground, and the arena, spectators and other players are located in the background. The forward player is going to kick the ball. The leg of the player is expected to be the target with fastest velocity towards the photographer. This target shall be focused by the camera out of the multiple targets in the scene. Further applications may be to setup a self-timer which triggers at any motion higher than a given speed threshold or to trigger on speed in a particular direction, in particular towards or away from the camera.

Recently, OFDM radar systems have been disclosed, e.g. in Martin Braun, Marcus Müller, Manuel Fuhr, Friedrich K. Jondral, "A USRP-based Testbed for OFDM-based Radar and Communication Systems", Proceedings of 22nd Virginia Tech Symposium on Wireless Communications, Blacksburg, June 2012 or in the PhD Thesis of Christian Sturm on "Gemeinsame Realisierung von Radar-Sensorik und Funkkommunikation mit OFDM-Signalen". Such OFDM radar systems output after a two-dimensional Fourier Transform (2D-FFT) (usually implemented using a Fast Fourier Transformation) a two-dimensional matrix (also called Range-Doppler-Matrix) containing distance and speed information of targets where for each target within the radar field of view the distance and speed information is provided. A detailed description of this process and the formation of such a matrix can be found in the above mentioned documents, in particular in section II of the paper of Martin Braun et al. (said matrix being referred to as periodogram there) and section 2.5 of the PhD Thesis of Christian Sturm.

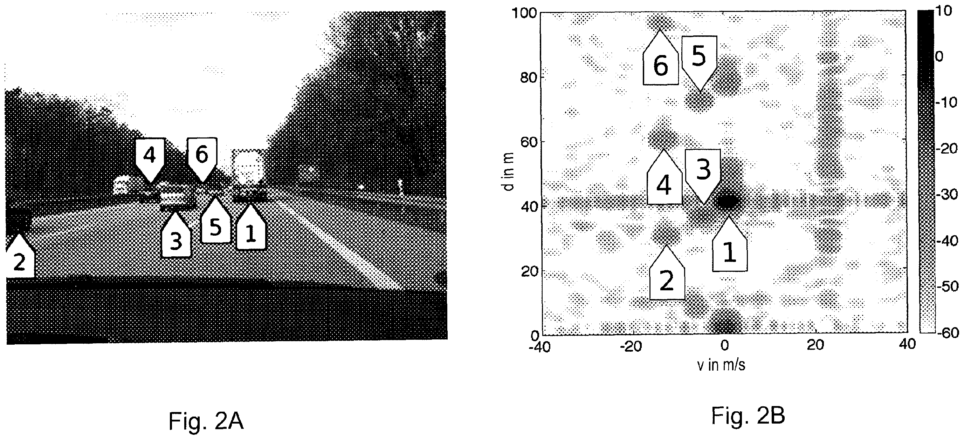

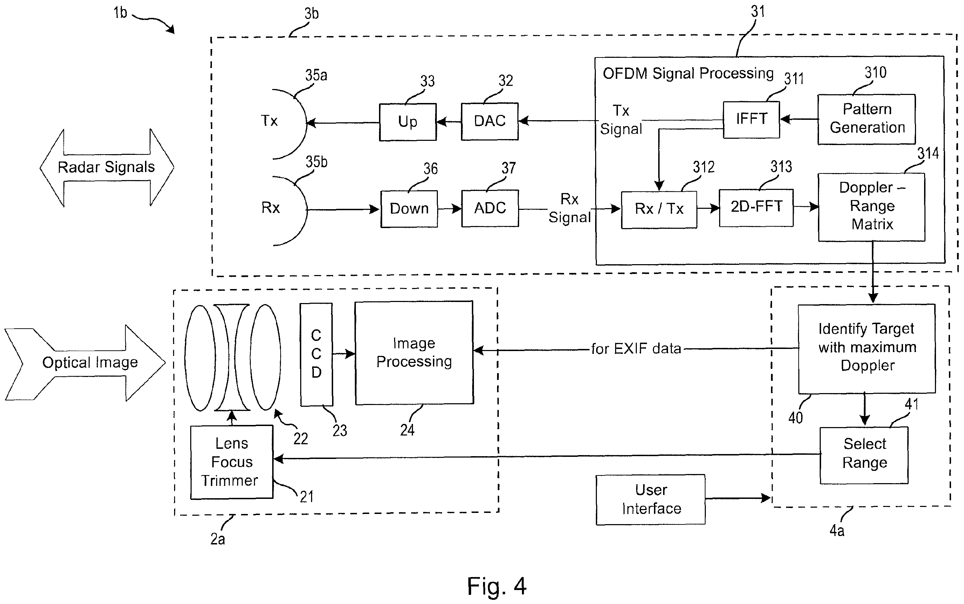

Fig. 2A shows a scene photographed on a German highway, where three cars on the left lane pass with highest speed two other cars on the middle lane passing a truck on the right lane. Fig. 2B shows the corresponding radar image recoded using an OFDM radar system. This radar image provides the relation between Doppler (relative speed v with respect to the OFDM radar system) and range (distance d with respect to the OFDM radar system) of each target in the scene. Cars ("targets") identified in the picture (labeled by "1" to "6") are also labeled in the radar image. Figs. 2A and 2B are taken from the PhD Thesis of Christian Sturm (Figs. 4.8 and 4.9).

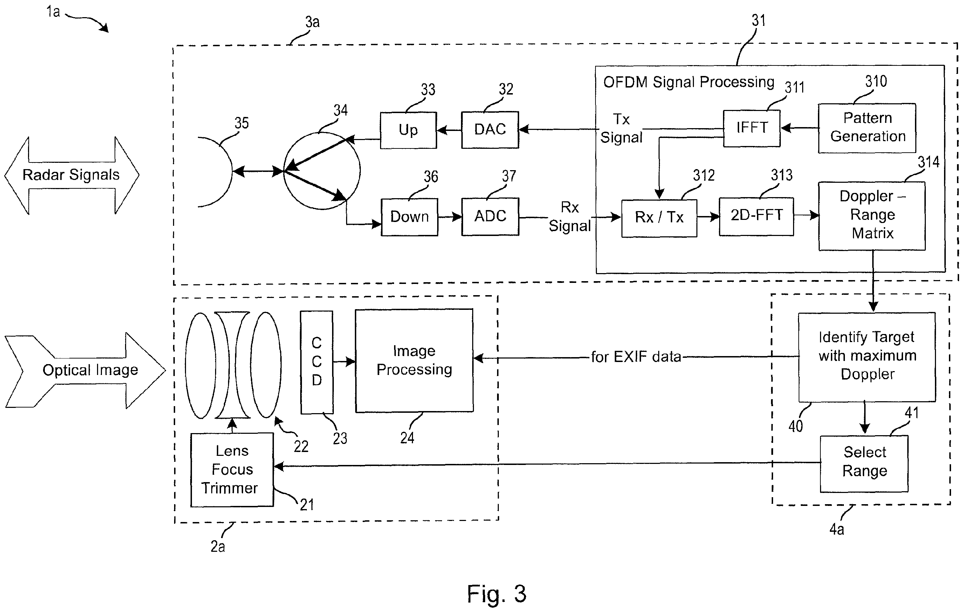

Figs. 3 and 4 show schematic diagrams of a first and second, more detailed embodiments of a camera 1a, 1b according to the present disclosure. These embodiments will be explained with reference to the application that the fastest moving target shall be focused on by the camera 1a, 1b. It shall, however, be noted that the same cameras can be used for other applications and in other modes, as will be explained further down below. Further, the radar system is an OFDM radar system, while other radar systems may be used as well.

The OFMD radar system 3a comprises an OFDM signal procession unit 31 which may be implemented in an integrated circuit (IC). It includes a pattern generator 310 to generate the information or data to be transmitted. There are various additional applications possible (as explained below) where the transmit data could additionally be utilized. Generally, for obtaining the desired distance and speed information random data may be used for transmission by the OFDM radar system. The data are processed by an IFFT unit 311 to generate the OFDM signals to be transmitted as Tx signal. A digital to analog converter (DAC) 32 forwards the OFDM signal to an up-converter 33 shifting the signal into the high frequency range (e.g. to 24GHz or 77GHz). The directional bridge 34 guides the transmit signals to the antenna 35 where the received signals are guided to the frequency down converter 36 and the analog to digital converter (ADC) 37 creating the digital receive signal (Rx signal).

In this embodiment of the camera 1a shown in Fig. 3 one bidirectional antenna 35 is used for transmitting and receiving the radar signals. However, the autofocus application proposed by the present invention may also be implemented using two antennas 35a, 35b, one (35a) for transmitting and the other one (35b) for receiving as providing in the embodiment of the camera 1b shown in Fig. 4 comprising another embodiment of the radar system 3b. In this dual antenna approach the directional bridge 34 is not needed.

Subsequently, in the OFDM signal processing unit 31 the Rx signal is divided in a divider 312 by the Tx signal resulting in a channel estimation information of each OFDM symbol. This information is collected in a time-frequency matrix where the OFDM symbols are aligned in time and frequency domain. The 2D-FFT unit 313 calculates the Doppler-Range matrix. In an analysis unit 134 the Doppler information is derived out of the FFT over the time axis and the range information is derived out of the FFT over the frequency axis. More details about how to obtain such a matrix including distance and speed information of targets within a scene can be found in the above mentioned theses and paper.

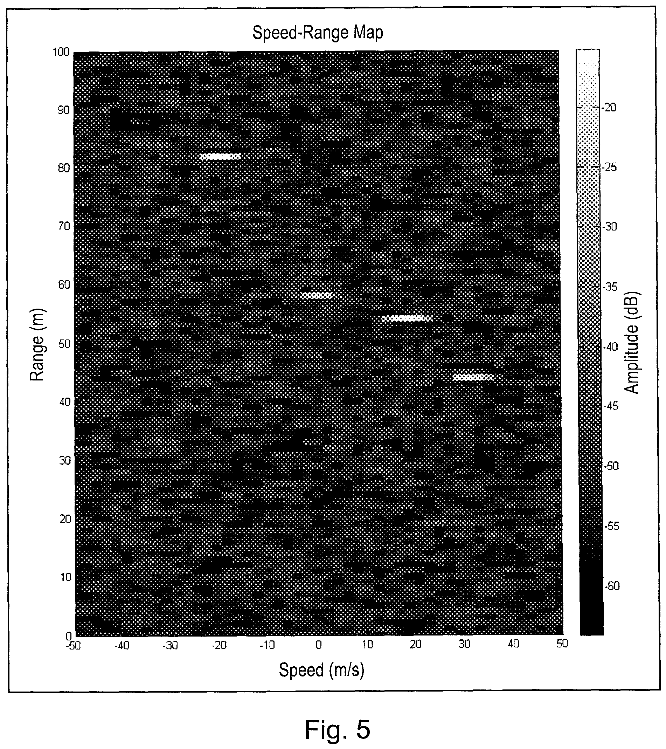

Fig. 5 shows an example of a Speed (or Doppler)-Range matrix (or map) including four targets. The closest target is located at a distance of 45m having a speed of +30m/s relative to the radar system. The second closest target is found at 54m distace with the speed of 20m/s. Next target is located 58m away from the radar and has the identical speed than the radar platform. The most remote target is at a distance of 83m with the speed of -20m/s relative to the radar itself.

The Doppler-Range matrix provides a unique relationship of speed (Doppler) and distance (range) for each target in the radared scene, i.e. in the radar field of view. A maximum detection unit 40 within the control unit 4a identifies the target providing highest velocity. The range of this target is selected in a selection unit 41. The range information is forwarded to the lens focus trimmer 21, representing the focusing unit, to adjust the focus to the distance of the desired target, i.e. to control the camera optics 22 to focus on the selected distance.

As a next step the picture of the optical field of view is recorded on the charge-coupled device (CCD) sensor 23 and further processed by the image processing unit 24. The speed of the target (and/or the distance or other information obtained by the radar system) may further be stored along with the recorded image, e.g. in the images exchangeable image file format (EXIF) data. Further, speed and range of all other identified targets, derivable from the Doppler-Range matrix, may also be saved in the EXIF data.

In the case of a 'Macro' image (compared to a long range image) the properties of the radar system can be adapted. For instance, in order to radar short distances the radar observation time or signal repetition time of the radar signals may be shortened to avoid the reflections to arrive before transmission is ended. If the scene of interest is in a long distance to the camera the radar observation time or signal repetition time may be expanded. Shortening the radar observation time can be done by using shorter OFDM symbols with less carriers or sending a reduced number of OFDM symbols. Of course, expanding the observation time can be done with enlarging the number of carriers or sending longer OFDM symbols.

In addition the photographer may adjust the resolution of the speed to be detected by the camera. A fine speed resolution is achieved with a long observation time. A low speed resolution, but a short measurement time is achieved with a short radar observation time. For instance, scenes including objects with high speed are not captured in close distances and 'macro' mode. Photographing in 'macro' mode, as one potential focusing mode, requires high velocity resolution. When the camera is set to 'macro' mode the observation time of the radar may be enhanced.

In the case of a Frequency Modulated Continuous Wave (FMCW) radar the timings of the ramps might be adjusted to enlarge or shorten the signal time. In the case of a pulse based radar, the pulse repetition timing might be adapted.

Further applications where the generated data pattern could be used. For instance, transmitted OFDM data payload might be utilized to transmit a sequence identifying the camera. In the case of multiple simultaneous photo shots from multiple cameras the device transmitting the radar signal can be identified. This avoids coexistence problems with multiple cameras. Further, data may be transmitted for communication from one camera to another camera system. Such a communication may be used e.g. to synchronize the cameras so that e.g. flashlights do not interfere among multiple cameras.

The known approach of focusing on the fastest object using the artificial intelligence algorithm, which has been briefly explained above in the background section, may be combined with the proposed OFDM radar approach. OFDM radar is particularly able to measure the speed (Doppler) in a direction to or away from the radar system. An autofocus based on artificial intelligence may further detect targets moving in normal direction e.g. a formula 1 race car passing the spectators' seats in parallel to the tribune. Combining both autofocus approaches will enhance the precision of the distance measures.

In case there are several targets having the selected (e.g. maximum) speed the camera may focus on the target providing the strongest reflected signal level. This results in that either the target of the larger size, i.e. the dominant object in the scene, or the target closer to the camera is focused. Generally, a precise focus is more important at close targets than at targets in a wide distance.

In the above explained embodiments the fastest target (relative to the camera or absolute) shall be focused. In other embodiments, another speed, e.g. the slowest (e.g. stationary) target (relative to the camera or absolute), or a target having the same speed as the camera (i.e. a target that has a relative speed of zero with respect to the camera) may be focused. In still other embodiments a distance (or distance range) may be selected in advance, at which a target shall be focused. This may be useful if e.g. the only standing person in a moving crowd of people shall be focused.

There are several possibilities: Either the camera is moving (e.g. mounted on a car, bicycle, boat, train, plane, any moving platform, etc.) or the camera is mounted fix (e.g. on a tripod). The camera might identify its own movement by interpretation of the radar image or any secondary information like acceleration sensors, tachometer of car, satellite positioning (GPS, Glonass, etc.) information, etc. The camera might identify its own speed and the speed of other objects in the scene. Further, the camera might identify objects with fastest absolute speed and with fastest relative speed towards the camera.

If camera is mounted fixed, the focus might be selected on the fastest object in the view towards the camera or the fastest object in the view away from the camera.

If the camera is moving, the focus might be selected on the object having the fastest absolute speed towards the camera, the object having the fastest absolute speed away from the camera, the object having the fastest relative speed to the camera towards the camera, the object having the fastest relative speed to the camera away from the camera, the object having the same speed as the camera, etc.

If released (or triggered), the camera might record multiple images with individual focus on all of the scenarios described above. The user might select the image satisfying his interest and delete the others. The post processing of the camera might calculate one sharp image of the full scenery out of the multiple images taken (where on each only a part of the scenery is sharp).

Thus, in an embodiment the control unit is configured to select a target within the radar field of view based on a selected speed, to derive the distance of the selected target from the distance and speed information obtained by the radar system and to control the focusing unit to focus said optical system on a target within the optical field of view having the selected speed and the derived distance. In another embodiment the control unit is configured to select a target within the radar field of view based on a selected distance, to derive the speed of the selected target from the distance and speed information obtained by the radar system and to control the focusing unit to focus said optical system on a target within the optical field of view having the selected distance and the derived speed.

In still further embodiments the control unit may be configured to control the focusing unit to focus said optical system i) on a target within the optical field of view having a speed above a selected speed threshold, ii) on the fastest target within the optical field of view or on a target having a relative speed of substantially zero with respect to the camera, or iii) on a target within the optical field of view moving into a predetermined direction, in particular towards or away from the camera.

The various focusing modes may be selected by the user at the camera, e.g. by a user interface 5 (as shown in Fig. 4), such as a knob, button, display or touchscreen showing a menu of selectable focusing modes. In other embodiments of the camera a particular focusing mode is pre-installed, such as in cameras for special applications.

Advantageously, the optical system of the disclosed camera is configured to automatically record an image once it is controlled by the control unit to focus on a target based on a selected distance and/or a selected speed. For instance, if the camera shall be focused on the fastest target in the optical field of view, once the fastest target has been identified and focused an image is automatically recorded (or at least pre-recorded) before the user actually actively starts the recording, e.g. by hitting the recording button of the camera. This avoids any loss of time since the scene, particularly the fastest target, will likely change quickly due to the fast movement of the fastest target.

Generally, the radar system has only a single antenna both for transmission and reception or one antenna for transmission and one antenna for reception, i.e. is configured as a SISO radar system. In another embodiment two or more antennas are provided, i.e. the radar system is configured as MIMO radar system.

Optionally, in addition to distance and speed information angle information (i.e. of the azimuth angle with respect to the camera) of one or more targets, e.g. of the fastest target, can be obtained in an embodiment of the radar system. This is particularly possible by use of a MIMO radar system. The angle information can e.g. be useful to determine which of the targets in an image has a particular speed and distance. For instance, if several targets are shown in an image at substantially the same distance and are all focused, the angle information can be used to determine which of the (focused) targets had a particular speed, e.g. which was the fastest target. The angle information is thus preferably also stored along with the recorded image, e.g. in the EXIF data.

In summary, the proposed camera, autofocus system and autofocus control method provide for various advantageous focusing modes, for instance enable a focusing on fast objects within a scene, which is particularly achieved by use of a radar system for obtaining distance and speed information about targets within the scene and by control of the focusing unit of the camera using the obtained distance and speed information.

Thus, the foregoing discussion discloses and describes merely exemplary embodiments of the present disclosure.

In the claims, the word "comprising" does not exclude other elements or steps, and the indefinite article "a" or "an" does not exclude a plurality. A single element or other unit may fulfill the functions of several items recited in the claims.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an exemplary implementation of the present disclosure. Further, such a software may also be distributed in other forms, such as via the Internet or other wired or wireless telecommunication systems.

The elements of the disclosed autofocus system may be implemented by corresponding hardware and/or software elements, for instance appropriated circuits. A circuit is a structural assemblage of electronic components including conventional circuit elements, integrated circuits including application specific integrated circuits, standard integrated circuits, application specific standard products, and field programmable gate arrays. Further a circuit includes central processing units, graphics processing units, and microprocessors which are programmed or configured according to software code. A circuit does not include pure software, although a circuit includes the above-described hardware executing software.

## Claims

1. An auto focus system for a camera (1), the camera comprising a radar system (3) and an optical system (2) configured to record images based on light from an optical field of view (20) entering the optical system (2), said autofocus system comprising:
- a focusing unit (21) configured to focus the optical system (2) on a target (100) in the optical field of view (20), and
- a control unit (4) configured to control the focusing unit (21) to focus said optical system (2) on the target (100), and being **characterized in that** said control unit (4) is configured to
i) receive by the radar system (3) distance and speed information with respect to the camera (1) of targets within a radar field of view (30) that is overlapping with said optical field of view (20), and
ii) control the focusing unit (21) to focus said optical system (2) on a target (100) selected based on a selected distance and/or a selected speed provided by the radar system (3),

2. The autofocus system as claimed in claim 1, wherein said control unit (4) is configured to select a target (100) within the radar field of view (30) based on a selected speed, to derive the distance of the selected target (100) from the distance and speed information obtained by the radar system (3) and to control the focusing unit (21) to focus said optical system (2) on a target (100) within the optical field of view (20) having the selected speed and the derived distance.

3. The autofocus system as claimed in any preceding claim, wherein said control unit (4) is configured to select a target (100) within the radar field of view (30) based on a selected distance, to derive the speed of the selected target (100) from the distance and speed information obtained by the radar system (3) and to control the focusing unit (21) to focus said optical system (2) on a target (100) within the optical field of view (20) having the selected distance and the derived speed.

4. The autofocus system as claimed in any preceding claim,
wherein said control unit is configured to control the focusing unit (21) to focus said optical system on a target (100) within the optical field of view (20) having a speed above a selected speed threshold and/or on the fastest target within the optical field of view (20) or on a target (100) having a relative speed of substantially zero with respect to the camera (1) and/or
on a target (100) within the optical field of view (20) moving into a predetermined direction, in particular towards or away from the camera (1).

5. The auto focus system as claimed in any preceding claim,
wherein the control unit (4) is configured to control one or more parameters, in particular the observation time and/or resolution, of the radar system (3) based on the distance of the targets (100) within the radar field of view (30).

6. A camera (1) comprising:
- an optical system (2) configured to record images based on light entering the optical system from an optical field of view (20),
- a radar system (3) configured to obtain said distance and speed information with respect to the camera of targets within the radar field of view (30), and
- an auto focus system as claimed in claim 1.

7. The camera as claimed in claim 6,
further comprising a user interface (5) allowing a user to select a range or value of distance and/or speed to be used by the control unit for controlling the focusing unit (21) and/or allowing a user to select a predetermined focusing mode according to which the control unit automatically controls the focusing unit (21) to focus said optical system on a target having a predetermined distance and/or speed.

8. The camera as claimed in claim 6 or 7,
wherein said radar system (3) is configured to have a radar field of view that covers the optical field of view, in particular coincides with the optical field of view.

9. The camera as claimed in one of claims 6 to 8,
wherein the radar system (3) is configured to obtain a Doppler-Range matrix of the radar field of view (30), said Doppler-Range matrix including the distance and speed information of the targets within the radar field of view (30).

10. The camera as claimed in one of claims 6 to 9,
wherein the optical system (2) is configured to automatically record an image once it is controlled by the control unit (4) to focus on a target (100) based on a selected distance and/or a selected speed.

11. The camera as claimed in one of claims 6 to 10,
wherein the optical system (2) is configured to record the speed and/or distance information of the target (100) on which the optical system (2) is focused or of all targets (100) within the optical field of view (20) along with a recorded image, in particular in exchangeable image file format data.

12. The camera as claimed in one of claims 6 to 11,
wherein the radar system is an OFDM radar system.

13. The camera as claimed in claim 12,
wherein the control unit (4) is configured to control the observation time of the radar system (3) based on the distance of the targets (100) within the radar field of view (30) by adapting the length and/or number of OFDM symbols transmitted by the radar system (3) and/or to embed data into the transmitted OFDM signals, wherein said data comprise identification data identifying the camera (1) allowing the camera to identify if received radiation is received in response to radiation transmitted by its radar system (3) or by radar systems of other cameras (1) and/or synchronization data for synchronizing two or more cameras.

14. An autofocus control method for a camera (1) with an optical system (2) configured to record images based on light from an optical field of view (20) entering the optical system (2), the camera (1) further comprising:
- a focusing unit (21) configured to focus the optical system (2) on a target (100) in the optical field of view (20),
- a control unit (4) configured to control the focusing unit (21) to focus said optical system (2) on the target (100), and
- a radar system (3);
said autofocus control method comprising:
i) receiving by the radar system (3) distance and speed information with respect to the camera (1) of targets within a radar field of view (30) that is overlapping with said optical field of view (20), and
ii) controlling the focusing unit (21) to focus said optical system (2) on a selected target (100) that is selected based on a selected distance and/or a selected speed selected from the received distance and speed information, said distance and speed information being provided by the radar system (3).

15. A computer program comprising program code means for causing a computer to perform the steps of said method according claim 14 when said computer program is carried out on a computer.

## Patentansprüche

1. Autofokussystem für eine Kamera (1), wobei die Kamera ein Radarsystem (3) und ein optisches System (2), das ausgelegt ist zum Aufzeichnen von Bildern auf der Grundlage von Licht aus einem optischen Sichtfeld (20), das in das optische System (2) eintritt, umfasst, wobei das Autofokussystem Folgendes umfasst:
- eine Fokussiereinheit (21), ausgelegt zum Fokussieren des optischen Systems (2) auf ein Ziel (100) in dem optischen Sichtfeld (20), und
- eine Steuereinheit (4), ausgelegt zum Steuern der Fokussiereinheit (21) zum Fokussieren des optischen Systems (2) auf das Ziel (100),
und **dadurch gekennzeichnet, dass** die Steuereinheit (4) ausgelegt ist zum
i) Empfangen, durch das Radarsystem (3), von Distanz- und Geschwindigkeitsinformationen hinsichtlich der Kamera (1) von Zielen innerhalb eines Radar-Sichtfelds (30), das mit dem optischen Sichtfeld (20) überlappt, und
ii) Steuern der Fokussiereinheit (21) zum Fokussieren des optischen Systems (2) auf ein Ziel (100), das auf der Grundlage einer ausgewählten Distanz und/oder einer ausgewählten Geschwindigkeit, geliefert durch das Radarsystem (3), ausgewählt wurde.

2. Autofokussystem nach Anspruch 1,
wobei die Steuereinheit (4) ausgelegt ist zum Auswählen eines Ziels (100) innerhalb des Radar-Sichtfelds (30) auf der Grundlage einer ausgewählten Geschwindigkeit, zum Ableiten der Distanz des ausgewählten Ziels (100) aus den durch das Radarsystem (3) erhaltenen Distanz- und Geschwindigkeitsinformationen und zum Steuern der Fokussiereinheit (21) zum Fokussieren des optischen Systems (2) auf ein Ziel (100), das die ausgewählte Geschwindigkeit und die abgeleitete Distanz aufweist, innerhalb des optischen Sichtfelds (20).

3. Autofokussystem nach einem der vorhergehenden Ansprüche,
wobei die Steuereinheit (4) ausgelegt ist zum Auswählen eines Ziels (100) innerhalb des Radar-Sichtfelds (30) auf der Grundlage einer ausgewählten Distanz, zum Ableiten der Geschwindigkeit des ausgewählten Ziels (100) aus den durch das Radarsystem (3) erhaltenen Distanz- und Geschwindigkeitsinformationen und zum Steuern der Fokussiereinheit (21) zum Fokussieren des optischen Systems (2) auf ein Ziel (100), das die ausgewählte Distanz und die abgeleitete Geschwindigkeit aufweist, innerhalb des optischen Sichtfelds (20).

4. Autofokussystem nach einem der vorhergehenden Ansprüche,
wobei die Steuereinheit ausgelegt ist zum Steuern der Fokussiereinheit (21) zum Fokussieren des optischen Systems auf ein Ziel (100) innerhalb des optischen Sichtfelds (20), das eine Geschwindigkeit über einer ausgewählten Geschwindigkeitsschwelle aufweist, und/oder auf das schnellste Ziel innerhalb des optischen Sichtfelds (20) oder auf ein Ziel (100), das ein relative Geschwindigkeit von im Wesentlichen null in Bezug auf die Kamera (1) aufweist, und/oder auf ein Ziel (100) innerhalb des optischen Sichtfelds (20), das sich in eine vorbestimmte Richtung bewegt, insbesondere auf die Kamera (1) zu oder von dieser weg.

5. Autofokussystem nach einem der vorhergehenden Ansprüche,
wobei die Steuereinheit (4) ausgelegt ist zum Steuern eines oder mehrerer Parameter, insbesondere der Beobachtungszeit und/oder der Auflösung, des Radarsystems (3) auf der Grundlage der Distanz des Ziels (100) innerhalb des Radar-Sichtfelds (30).

6. Kamera (1), die Folgendes umfasst:
- ein optisches System (2), ausgelegt zum Aufzeichnen von Bildern auf der Grundlage von Licht, das aus einem optischen Sichtfeld (20) in das optische System eintritt,
- ein Radarsystem (3), ausgelegt zum Erhalten der Distanz- und Geschwindigkeitsinformationen in Bezug auf die Kamera von Zielen innerhalb des Radar-Sichtfelds (30), und
- ein Autofokussystem nach Anspruch 1.

7. Kamera nach Anspruch 6,
ferner umfassend eine Benutzerschnittstelle (5), die es einem Benutzer erlaubt, einen Bereich oder einen Wert einer Distanz und/oder einer Geschwindigkeit auszuwählen, der durch die Steuereinheit zum Steuern der Fokussiereinheit (21) verwendet werden soll, und/oder die es einem Benutzer erlaubt, einen vorbestimmten Fokussierungsmodus auszuwählen, gemäß dem die Steuereinheit die Fokussiereinheit (21) automatisch steuert, das optische System auf ein Ziel zu fokussieren, das eine vorbestimmte Distanz und/oder Geschwindigkeit aufweist.

8. Kamera nach Anspruch 6 oder 7,
wobei das Radarsystem (3) dafür ausgelegt ist, ein Radar-Sichtfeld aufzuweisen, das das optische Sichtfeld abdeckt, insbesondere mit dem optischen Sichtfeld zusammenfällt.

9. Kamera nach einem der Ansprüche 6 bis 8,
wobei das Radarsystem (3) ausgelegt ist zum Erhalten einer Doppler-Entfernungs-Matrix bzw. Doppler-Range-Matrix des Radar-Sichtfelds (30), wobei die Doppler-Range-Matrix die Distanz- und Geschwindigkeitsinformationen der Ziele innerhalb des Radar-Sichtfelds (30) beinhaltet.

10. Kamera nach einem der Ansprüche 6 bis 9,
wobei das optische System (2) ausgelegt ist zum automatischen Aufzeichnen eines Bilds, sobald es durch die Steuereinheit (4) angesteuert wird, auf der Grundlage einer ausgewählten Distanz und/oder einer ausgewählten Geschwindigkeit, auf ein Ziel (100) zu fokussieren.

11. Kamera nach einem der Ansprüche 6 bis 10,
wobei das optische System (2) ausgelegt ist zum Aufzeichnen der Geschwindigkeits- und/oder der Distanzinformationen des Ziels (100), auf welches das optische System (2) fokussiert ist, oder von allen Zielen (100) innerhalb des optischen Sichtfelds (20) zusammen mit einem aufgezeichneten Bild, insbesondere in austauschbaren Bilddateiformatdaten.

12. Kamera nach einem der Ansprüche 6 bis 11,
wobei das Radarsystem ein OFDM-Radarsystem ist.

13. Kamera nach Anspruch 12,
wobei die Steuereinheit (4) ausgelegt ist zum Steuern der Beobachtungszeit des Radarsystems (3) auf der Grundlage der Distanz der Ziele (100) innerhalb des Radar-Sichtfelds (30) durch Anpassen der Länge und/oder der Anzahl von durch das Radarsystem (3) gesendeten OFDM-Symbolen und/oder zum Einbetten von Daten in die gesendeten OFDM-Signale, wobei die Daten Identifikationsdaten umfassen, die die Kamera (1) identifizieren, was es der Kamera erlaubt, zu identifizieren, ob empfangene Strahlung als Reaktion auf durch deren Radarsystem (3) oder durch Radarsysteme anderer Kameras (1) gesendete Strahlung empfangen wird, und/oder Synchronisationsdaten zum Synchronisieren von zwei oder mehr Kameras.

14. Autofokussteuerungsverfahren für eine Kamera (1) mit einem optischen System (2), das ausgelegt ist zum Aufzeichnen von Bildern auf der Grundlage von Licht aus einem optischen Sichtfeld (20), das in das optische System (2) eintritt, wobei die Kamera (1) ferner Folgendes umfasst:
- eine Fokussiereinheit (21), ausgelegt zum Fokussieren des optischen Systems (2) auf ein Ziel (100) in dem optischen Sichtfeld (20),
- eine Steuereinheit (4), ausgelegt zum Steuern der Fokussiereinheit (21) zum Fokussieren des optischen Systems (2) auf das Ziel (100), und
- ein Radarsystem (3);
wobei das Autofokussteuerungsverfahren Folgendes umfasst:
i) Empfangen, durch das Radarsystem (3), von Distanz- und Geschwindigkeitsinformationen hinsichtlich der Kamera (1) von Zielen innerhalb eines Radar-Sichtfelds (30), das mit dem optischen Sichtfeld (20) überlappt, und
ii) Steuern der Fokussiereinheit (21) zum Fokussieren des optischen Systems (2) auf ein ausgewähltes Ziel (100), das ausgewählt wurde auf der Grundlage einer ausgewählten Distanz und/oder einer ausgewählten Geschwindigkeit, ausgewählt aus den empfangenen Distanz- und Geschwindigkeitsinformationen, wobei die Distanz- und Geschwindigkeitsinformationen durch das Radarsystem (3) geliefert wurden.

15. Computerprogramm, umfassend Programmcodemittel zum Veranlassen eines Computers zum Durchführen der Schritte des Verfahrens nach Anspruch 14, wenn das Computerprogramm auf einem Computer ausgeführt wird.

## Revendications

1. Système de mise au point automatique pour un appareil photo (1), l'appareil photo comprenant un système radar (3) et un système optique (2) configuré pour enregistrer des images sur la base d'une lumière qui entre dans le système optique (2) en provenance d'un champ de vision optique (20), ledit système de mise au point automatique comprenant :
une unité de mise au point (21), configurée pour mettre au point le système optique (2) sur une cible (100) dans le champ de vision optique (20), et
une unité de contrôle (4), configurée pour contrôler l'unité de mise au point (21) pour mettre au point ledit système optique (2) sur la cible (100),
et le système de mise au point automatique étant **caractérisé en ce que** ladite unité de contrôle (4) est configurée pour :
i) recevoir, par le système radar (3), une information de distance et de vitesse par rapport à l'appareil photo (1) de cibles dans un champ de vision radar (30) qui chevauche ledit champ de vision optique (20), et
ii) contrôler l'unité de mise au point (21) pour mettre au point ledit système optique (2) sur une cible (100) sélectionnée sur la base d'une distance sélectionnée et/ou d'une vitesse sélectionnée fournies par le système radar (3).

2. Système de mise au point automatique selon la revendication 1,
dans lequel ladite unité de contrôle (4) est configurée pour sélectionner une cible (100) dans le champ de vision radar (30) sur la base d'une vitesse sélectionnée, pour déduire la distance de la cible sélectionnée (100) à partir de l'information de distance et de vitesse obtenue par le système radar (3) et pour contrôler l'unité de mise au point (21) pour mettre au point ledit système optique (2) sur une cible (100), dans le champ de vision optique (20), ayant la vitesse sélectionnée et la distance déduite.

3. Système de mise au point automatique selon l'une quelconque des revendications précédentes,
dans lequel ladite unité de contrôle (4) est configurée pour sélectionner une cible (100) dans le champ de vision radar (30) sur la base d'une distance sélectionnée, pour déduire la vitesse de la cible sélectionnée (100) à partir de l'information de distance et de vitesse obtenue par le système radar (3) et pour contrôler l'unité de mise au point (21) pour mettre au point ledit système optique (2) sur une cible (100), dans le champ de vision optique (20), ayant la distance sélectionnée et la vitesse déduite.

4. Système de mise au point automatique selon l'une quelconque des revendications précédentes,
dans lequel ladite unité de contrôle est configurée pour contrôler l'unité de mise au point (21) pour mettre au point ledit système optique sur une cible (100), dans le champ de vision optique (20), ayant une vitesse supérieure à un seuil de vitesse sélectionné et/ou sur la cible la plus rapide dans le champ de vision optique (20) ou sur une cible (100) ayant une vitesse relative sensiblement nulle par rapport à l'appareil photo (1), et/ou
sur une cible (100), dans le champ de vision optique (20), se déplaçant dans une direction prédéterminée, en particulier vers l'appareil photo (1) ou à l'opposé de celui-ci.

5. Système de mise au point automatique selon l'une quelconque des revendications précédentes,
dans lequel l'unité de contrôle (4) est configurée pour contrôler un ou plusieurs paramètres, en particulier la durée d'observation et/ou la résolution, du système radar (3) sur la base de la distance des cibles (100) dans le champ de vision radar (30).

6. Appareil photo (1), comprenant :
un système optique (2), configuré pour enregistrer des images sur la base d'une lumière qui entre dans le système optique en provenance d'un champ de vision optique (20),
un système radar (3), configuré pour obtenir ladite information de distance et de vitesse par rapport à l'appareil photo de cibles dans le champ de vision radar (30), et
un système de mise au point automatique selon la revendication 1.

7. Appareil photo selon la revendication 6,
comprenant en outre une interface d'utilisateur (5) permettant à un utilisateur de sélectionner une plage ou une valeur de distance et/ou de vitesse que doit utiliser l'unité de contrôle pour contrôler l'unité de mise au point (21) et/ou permettant à un utilisateur de sélectionner un mode de mise au point prédéterminé selon lequel l'unité de contrôle contrôle automatiquement l'unité de mise au point (21) pour mettre au point ledit système optique sur une cible ayant une distance et/ou une vitesse prédéterminées.

8. Appareil photo selon la revendication 6 ou 7,
dans lequel ledit système radar (3) est configuré pour avoir un champ de vision radar qui couvre le champ de vision optique, en particulier qui coïncide avec le champ de vision optique.

9. Appareil photo selon l'une des revendications 6 à 8,
dans lequel le système radar (3) est configuré pour obtenir une matrice télémétrique par effet Doppler du champ de vision radar (30), ladite matrice télémétrique par effet Doppler incluant l'information de distance et de vitesse des cibles dans le champ de vision radar (30).

10. Appareil photo selon l'une des revendications 6 à 9,
dans lequel le système optique (2) est configuré pour enregistrer automatiquement une image après avoir été contrôlé, par l'unité de contrôle (4), pour effectuer une mise au point sur une cible (100) sur la base d'une distance sélectionnée et/ou d'une vitesse sélectionnée.

11. Appareil photo selon l'une des revendications 6 à 10,
dans lequel le système optique (2) est configuré pour enregistrer l'information de vitesse et/ou de distance de la cible (100) sur laquelle le système optique (2) est mis au point ou de toutes les cibles (100) dans le champ de vision optique (20) conjointement avec une image enregistrée, en particulier dans des données dans un format de fichier d'image échangeable.

12. Appareil photo selon l'une des revendications 6 à 11,
dans lequel le système radar est un système radar OFDM.

13. Appareil photo selon la revendication 12,
dans lequel l'unité de contrôle (4) est configurée pour contrôler la durée d'observation du système radar (3) sur la base de la distance des cibles (100) dans le champ de vision radar (30) en adaptant la longueur et/ou le nombre de symboles OFDM émis par le système radar (3) et/ou pour intégrer des données dans les signaux OFDM émis, lesdites données comprenant des données d'identification qui identifient l'appareil photo (1) et qui permettent à l'appareil photo d'identifier si un rayonnement reçu est reçu en réponse à un rayonnement émis par son système radar (3) ou par des systèmes radars d'autres appareils photos (1) et/ou des données de synchronisation pour synchroniser deux appareils photos ou plus.

14. Procédé de contrôle de mise au point automatique pour un appareil photo (1) avec un système optique (2) configuré pour enregistrer des images sur la base d'une lumière qui entre dans le système optique (2) en provenance d'un champ de vision optique (20), l'appareil photo (1) comprenant en outre :
une unité de mise au point (21), configurée pour mettre au point le système optique (2) sur une cible (100) dans le champ de vision optique (20),
une unité de contrôle (4), configurée pour contrôler l'unité de mise au point (21) pour mettre au point ledit système optique (2) sur la cible (100), et
un système radar (3) ;
ledit procédé de contrôle de mise au point automatique comprenant les étapes consistant à :
i) recevoir, par le système radar (3), une information de distance et de vitesse par rapport à l'appareil photo (1) de cibles dans un champ de vision radar (30) qui chevauche ledit champ de vision optique (20), et
ii) contrôler l'unité de mise au point (21) pour mettre au point ledit système optique (2) sur une cible sélectionnée (100) qui est sélectionnée sur la base d'une distance sélectionnée et/ou d'une vitesse sélectionnée, sélectionnées à partir de l'information de distance et de vitesse reçue, ladite information de distance et de vitesse étant fournie par le système radar (3).

15. Programme informatique comprenant un moyen formant code de programme pour amener un ordinateur à réaliser les étapes dudit procédé selon la revendication 14 quand ledit programme informatique est exécuté sur un ordinateur.
